(19) Europäisches Patentamt
European Patent Office
Office européen des brevets

(11) **EP 4 216 196 A1**

(12) **EUROPEAN PATENT APPLICATION**

(43) Date of publication:
**26.07.2023 Bulletin 2023/30**

(21) Application number: **22305057.6**

(22) Date of filing: **19.01.2022**

(51) International Patent Classification (IPC):
**G09B 21/00** *(2006.01)*

(52) Cooperative Patent Classification (CPC):
**G09B 21/008**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Accenture Global Solutions Limited Dublin 4 (IE)**

(72) Inventors:
• **SOUCHE, Christian**
  **06560 Valbonne (FR)**
• **MATHON, Edouard**
  **06, 06600 Antibes (FR)**
• **TANG, Ji**
  **06560 Valbonne (FR)**
• **SISSOKO, Habibou**
  **06600 Antibes (FR)**

(74) Representative: **Swindell & Pearson Limited 48 Friar Gate Derby DE1 1GY (GB)**

(54) **DISABILITY SIMULATIONS AND ACCESSIBILITY EVALUATIONS OF CONTENT**

(57)    Systems and methods for disability simulations and accessibility evaluations of content is disclosed. A disclosed system runs using an information loss determination engine via a processor, for a given disability, at least one simulation to simulate how a content is experienced by a user having such disability. The system computes information loss based on comparison of the simulated content with desired original content. Further, the system transmits data packets indicative of a content optimization strategy that is determined based on the determined information loss.

*FIG.1B*

EP 4 216 196 A1

**Description**

**BACKGROUND**

Generally, fifteen percentage of the global population may experience some form of disability. The disability prevalence may be higher for developing countries. Furthermore, one-fifth of the estimated global population, or between 110 million and 190 million people, may experience significant disabilities. For example, a disabled person may not know what content may look like. A disability may be a disability in digital experiences, which includes any condition that makes the content more difficult for a person to understand certain content. Hence, it may not necessary that the disability may need to be medical related condition. The disability in the digital experiences could include, for example, color blindness, bad Internet connection, having bad sleep quality or bad memory, and the like, which may cause some information to be lost while viewing the content. Furthermore, a disability may also include astigmatism, cataract, color blindness (deuteranopia, protanopia, tritanopia), using electronic display with light leakage or with low-resolution (< 1080P), hearing losses, myopia, non-native language speaker, using electronic device under sunshine, using earphone in noisy environment, dyslexia, and the like. The aforementioned disabilities may cause information loss to disabled users than the normal users.

Conventional systems may disclose aspects of determining content placement based on memorability, utilizing neural network models. For example, a conventional content system may receive content and target user category data identifying target users of the content and may modify one or more features of the content to generate a plurality of content data based on the content. The conventional content system may select a neural network model, based on the target user category data, and may process the plurality of content data, with the neural network model, to determine first and second memorability scores for the plurality of content data and plurality of areas, respectively. The conventional content system may perform one or more actions based on the first memorability scores or the second memorability scores. For example, based on the first memorability scores, the conventional content system may provide information identifying one or more changes to the one or more features (of the content) to increase a likelihood of the one or more target users remembering the content. Based on the second memorability scores, the conventional content system may provide information identifying one or more recommended areas (in the content) for placing content (e.g., placing a logo, placing a graphical object).

Specifically, when the content is displayed to the person of disability in the digital experiences, the brain of the disabled person would have received less information (image, video, text) from the displayed content or may have difficulty in understanding certain contents than the normal person. Conventionally, there may be no methods or systems to quantify the amount of information loss for certain/different disabled persons. Further, the conventional methods may not provide content appropriate for a disabled person.

**SUMMARY**

An embodiment of present disclosure includes a system including an information loss determination engine. A processor may cause the information loss determination engine to, for a given disability, run at least one simulation to simulate how a content may be experienced by a user having such disability. The disability may include, human disability, technical disability, social disability, and the like. The processor may cause the information loss determination engine to compute information loss based on comparison of the simulated content with desired original content. Further, the processor may cause the information loss determination engine to transmit data packets indicative of a content optimization strategy that may be determined based on the determined information loss.

Another embodiment of the present disclosure may include a method for disability simulations and accessibility evaluations of content. The method may include, for a given disability, running at least one simulation to simulate how a content may be experienced by a user having such disability. The method may include computing information loss based on comparison of the simulated content with desired original content. Further, the method may include transmitting data packets indicative of a content optimization strategy that may be determined based on the determined information loss.

Yet another embodiment of the present disclosure may include a non-transitory computer readable medium including machine executable instructions that may be executable by a processor to receive an input data corresponding to a programming language. The processor may, for a given disability, run at least one simulation to simulate how a content may be experienced by a user having such disability. The processor may compute information loss based on comparison of the simulated content with desired original content. Further, the processor may transmit data packets indicative of a content optimization strategy that may be determined based on the determined information loss.

**BRIEF DESCRIPTION OF DRAWINGS**

FIG. 1A illustrates an exemplary block diagram representation of a network architecture implementing a proposed system for disability simulations and accessibility evaluations of content, according to an example embodiment of the present disclosure.

FIG. 1B illustrates a detailed block diagram representation of the proposed system, according to an example embodiment of the present disclosure.

FIGs. 2A-2L illustrate exemplary schematic diagrams representation of key frames of a video including different subtitles, different images, and colorful images, according to an example embodiment of the present disclosure.

FIGs 3A-3C illustrate exemplary schematic diagrams representation of expected output from key frames of video, colorful images, according to an example embodiment of the present disclosure.

FIG. 4 illustrates a hardware platform for implementation of the disclosed system, according to an example embodiment of the present disclosure.

FIG. 5A illustrates a flow diagram depicting method of simulation of content, according to an example embodiment of the present disclosure.

FIG. 5B illustrates a flow diagram depicting method of disability simulations and accessibility evaluations of content, according to an example embodiment of the present disclosure.

**DETAILED DESCRIPTION**

For simplicity and illustrative purposes, the present disclosure is described by referring mainly to examples thereof. The examples of the present disclosure described herein may be used together in different combinations. In the following description, details are set forth in order to provide an understanding of the present disclosure. It will be readily apparent, however, that the present disclosure may be practiced without limitation to all these details. Also, throughout the present disclosure, the terms "a" and "an" are intended to denote at least one of a particular element. The terms "a" and "an" may also denote more than one of a particular element. As used herein, the term "includes" means includes but not limited to, the term "including" means including but not limited to. The term "based on" means based at least in part on, the term "based upon" means based at least in part upon, and the term "such as" means such as but not limited to. The term "relevant" means closely connected or appropriate to what is being performed or considered.

Various embodiments describe providing a solution in the form of a system and a method for disability simulations and accessibility evaluations of content.

Exemplary embodiments of the present disclosure have been described in the framework of improved disability simulations and accessibility evaluations of content. In an example, for a given disability, the present disclosure may run at least one simulation to simulate how a content may be experienced by a user having such disability. Further, the present disclosure may compute information loss based on comparison of the simulated content with desired original content. Further, the present disclosure may transmit data packets indicative of a content optimization strategy that may be determined based on the determined information loss. For each simulated video, the present disclosure may calculate an information loss such as text information loss, image information loss and audio information loss. The input content can be video or image or audio. The content may be optimized to respective user of disability viewing the content. The disability may include, but are not limited to, low resolution screen, astigmatism, using device under sunshine, color blindness, myopia, low energy state/memory, dyslexia, screen light leakage, cataract, hearing loss, noisy environment, non-native language speaker, bad sleep quality, device virus impact, user disability, bad Internet connection, and the like.

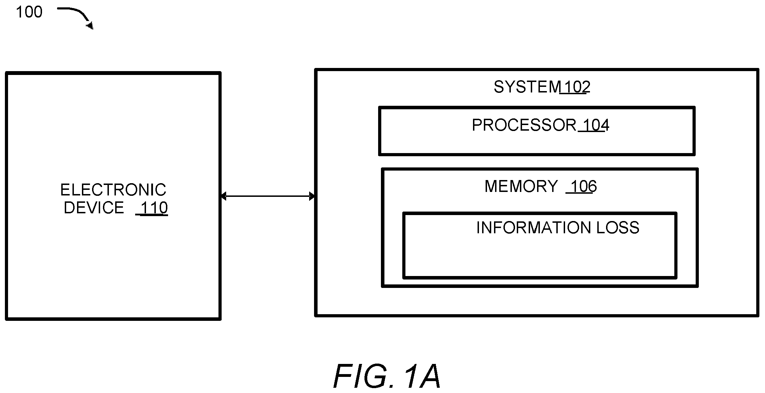

FIG. 1A illustrates an exemplary block diagram representation of a network architecture 100 implementing a system 102 for disability simulation and accessibility evaluations of content, according to an example embodiment of the present disclosure. The network architecture 100 may include the system 102 and an electronic device 110. The system 102 may be implemented by way of a single device or a combination of multiple devices that may be operatively connected or networked together. For instance, the system 102 may be implemented by way of standalone device such as server, and the like, and may be communicatively coupled to the electronic device 110. In another instance, the system 102 may be implemented in the electronic device 110. The electronic device 110 may include but are not limited to, a mobile device, a smart phone, a Personal Digital Assistant (PDA), a tablet computer, a wearable device, a Virtual Reality/Augment Reality (VR/AR) device, a laptop, and the like. The system 102 may be implemented in hardware or a suitable combination of hardware and software. Further, the system 102 may include an information loss determination engine 108 stored in a memory 106, which may be associated with a processor 104.

The system 102 may be a hardware device including the processor 104 executing machine-readable program instructions to perform disability simulations and accessibility evaluations of content. Execution of the machine-readable program instructions by the processor 104 may enable the proposed system 102 to perform disability simulations and accessibility evaluations of content. The "hardware" may comprise a combination of discrete components, an integrated circuit, an application-specific integrated circuit, a field programmable gate array, a digital signal processor, or other suitable hardware. The "software" may comprise one or more objects, agents, threads, lines of code, subroutines, separate software applications, two or more lines of code or other suitable software structures operating in one or more software applications or on one or more processors. The processor 104 may include, for example, microprocessors, microcomputers, microcontrollers, digital signal processors, central processing units, state machines, logic circuits, and/or any devices that manipulate data or signals based on operational instructions. Among other capabilities, the processor 104 may fetch and execute computer-readable instructions in a memory operationally coupled with system 102 for performing tasks such as data processing, input/output processing, feature extraction, and/or any other functions. Any reference to a task in the present disclosure may refer to an operation being or that may be performed on data.

In the example that follows, assume that a user of the system 102 desires to improve disability simulations and accessibility evaluations of content with respect to target users. The user may include an administrator of a website, an administrator of a social media site, an administrator of a social media application, an administrator of video content (e.g., television content, video on demand content, or online video content), among other examples. The disability simulations and accessibility evaluations of content may be to quantify amount of an information loss by the target users and to provide disability friendly content. The content may include, but are not limited to, digital content such as an image, a video, textual information, an audio, a webpage, a set of video frames, and the like, and physical content such as store design/designs, interior/exterior designs, drawings, newspaper/magazines, billboards, and the like. In some implementations, the content may be obtained from a website, a thumbnail image, a poster, a recording, a streamed content (real/non-real-time), camera feed, a social media post, received content, shared content, online content, and the like.

In an example embodiment, the system 102 includes the information loss determination engine 108, which when executed using the processor 104. The processor 104 may cause the information loss determination engine 108 to, for a given disability, run at least one simulation to simulate how a content may be experienced by a user having such disability. In an example embodiment, the content may include, but are not limited to, digital content such as an image, a video, text, an audio, a webpage, a set of video frames, and the like, and physical content such as store design/designs, interior/exterior designs, drawings, newspaper/magazines, billboards, and the like. For the content being a video, the key information components comprise one or more key video frames. The key information components may be determined based on the disability for which respective at least one simulation may be to be executed. In an embodiment, the disability may include, but are not limited to, low resolution screen, astigmatism, using device under sunshine, color blindness, myopia, low energy state/memory, dyslexia, screen light leakage, cataract, hearing loss, noisy environment, non-native language speaker, bad sleep quality, device virus impact, user disability, bad Internet connection, and the like.

Further, the processor 104 may cause the information loss determination engine 108 to compute information loss based on comparison of the simulated content with desired original content. The comparison may be undertaken based on difference hash (dHash). In an embodiment, the information loss may include, but are not limited to, text information loss, visual information loss, content information loss, audio information loss, video information loss, image information loss, and the like.

In an embodiment, for computation of information loss, the processor 104 may cause the information loss determination engine 108 to determine key information components that forms part of the desired original content. Further, the processor 104 may cause the information loss determination engine 108 to extract corresponding determined key information components from the simulated content. Furthermore, the processor 104 may cause the information loss determination engine 108 to compute the information loss based on comparison of the key information components that form part of the simulated content with the desired original content.

In an embodiment, the text information loss may be computed based on annotation and recognition of text that forms part of the content using contrasts (C) and text recognition certitude values (T) for the j-th image pair and the i-th text block pair as shown in equation 1 below:

$$L_{text}$$

$$= \frac{1}{n} \Sigma_{j=1}^{n} \frac{1}{m} \Sigma_{i=1}^{m} r_i$$

$$\times \left[ \max \left( 0, \ \min \left( \frac{C_{s,i} - C_{o,i}}{C_{o,i}}, \ 1 \right), \ \min \left( \frac{T_{o,i} - T_{s,i}}{T_{o,i}}, \ 1 \right) \right) \right] \dots. Equation \ 1$$

In the above equation 1, the term $r_i = 1_{\{font\ size>3\%\ video\ height\}}$ or $0_{\{font\ size\leq3\%\ video\ height\}}$, the term 'n' may refer to the number of key frame pairs, and the term 'm' may refer to the number of text blocks that *font size>3% video height*

In an embodiment, the image information loss may be computed based on Peak Signal-To-Noise Ratio (PSNR) for simulated image/video, and object recognition using calculation of object recognition certitude value (OC) on j-th image pair and the i-th object may be detected as shown in equation 2 below:

$$L_{image} = \frac{1}{n}\Sigma_{j=1}^{n}\left[p_2 \times \max\left(\frac{30-PSNR_j}{30}, 0\right)\right.$$

$$\left. + (1-p_2) \times \frac{1}{m}\Sigma_{i=1}^{m}r_i \times \min\left(\frac{OC_{s,i}-OC_{o,i}}{OC_{o,i}}, 1\right)\right] \dots\dots Equation\ 2$$

In the above equation 2, the term $p_2 \in [0,1]$ (Default 0.5), $r_i = 1_{\{object\ size>3\%\ video\ size\}}$ or $0_{\{object\ size\leq3\%\ video\ size\}}$, the term 'n' may refer to the number of key frame pairs, the term 'm' may refer to the number of objects recognized that *object size>3% video size.*

In an embodiment, the audio information loss may be computed based on speech recognition and sound classification, wherein for the i-th speech phrase recognized and j-th sound classified, speech recognition certitude (SC) and music recognition certitude (MC) may be calculated and used to calculate the audio information loss as shown in equation 3 below:

$$L_{audio} = \frac{1}{m}\Sigma_{j=1}^{m}\left[p_3 \times \min\left(\frac{SC_{s,i}-SC_{o,i}}{SC_{o,i}}, 1\right)\right] + \frac{1}{k}\Sigma_{i=1}^{k}\left[(1-p_3) \times\right.$$

$$\left.\min\left(\frac{MC_{s,i}-MC_{o,i}}{MC_{o,i}}, 1\right)\right] \dots\dots\dots. Equation\ 3$$

In the above equation 3, the term 'm' may refer to the number of speech phrases and k may be the number of soundtracks, the term $p_3 \in [0,1]$ (Default 0.5).

In an embodiment, the general information loss may be computed based on average of the text information loss, the audio information loss, and the image information loss. The general information loss may be computed based on joint probability distribution for j-th disability $P_j$, as shown in equation 4 below:

$$L = \Sigma_{j_1=0}^{1} \Sigma_{j_2=0}^{1} \cdots \Sigma_{j_n=0}^{1} \prod_{j=j_1}^{j_n}(1-P_j)L_{\{j_1,j_2,\dots,j_n\}} \dots\dots\dots. Equation\ 4$$

In the above equation 4, the term 'n' may refer to the number of simulations to be generated, and the term '$L_{\{j_1,j_2,\dots,jn\}}$' may present the information loss of the multi-disability simulated content.

Furthermore, the processor 104 may cause the information loss determination engine 108 to transmit data packets indicative of a content optimization strategy that may be determined based on the determined information loss. In an embodiment, the information loss may be approximated as shown in equation 5 below:

$$Approximated\ Information\ Loss = 1 - min\left(\sum_{j=1}^{n} P_j \times L_j, 1\right) \dots. Equation\ 5$$

In the above equation 5, the term 'n' may refer to the number of simulations to be generated.

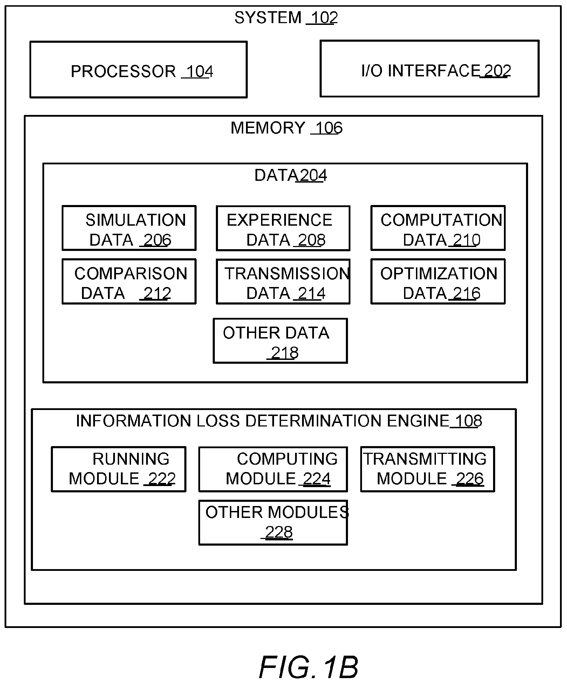

FIG. 1B illustrates a detailed block diagram representation of the proposed system 102, according to an example embodiment of the present disclosure. The system 102 may include the processor 104, an Input/Output (I/O) interface 202, and a memory 106. In some implementations, the system 102 may include data 204 and the information loss determination engine 108. As an example, the data 204 is stored in the memory 106 configured in the system 102 as shown in the FIG. 1B. In one embodiment, the data 204 may include simulation data 206, experience data 208, computation data 210, comparison data 212, transmission data 214, optimization data 216, and other data 218.

In an embodiment, the data 204 may be stored in the memory 106 in the form of various data structures. Additionally, the data 204 can be organized using data models, such as relational or hierarchical data models. The other data 218 may store data, including temporary data and temporary files, generated by the information loss determination engine 108 for performing the various functions of the system 102.

In an embodiment, the data 204 stored in the memory 106 may be processed by the information loss determination engine 108 of the system 102. The information loss determination engine 108 may be stored within the memory 106. In an example, the information loss determination engine 108 communicatively coupled to the processor 104 configured in the system 102, may also be present outside the memory 106 and implemented as hardware. As used herein, the term modules refer to an application-specific integrated circuit (ASIC), an electronic circuit, a processor (shared, dedicated, or group) and memory that execute one or more software or firmware programs, a combinational logic circuit, and/or other suitable components that provide the described functionality.

In an embodiment, the information loss determination engine 108 may include, for example, a running module 222, a computing module 224, a transmitting module 226, and other modules 228. The other modules 228 may be used to perform various miscellaneous functionalities of the system 102. It will be appreciated that such aforementioned modules may be represented as a single module or a combination of different modules.

In an embodiment, the running module 222 may run via the information loss determination engine 108, for a given disability, at least one simulation to simulate how a content is experienced by a user having the given disability. The at least one simulation may be stored as simulation data 206. The content experienced by the user may be stored as the experience data 208. Further, the computing module 224 may compute information loss based on comparison of the simulated content with desired original content. The computed information loss may be stored as the computation data 210. The comparison of the simulated content may be stored as the comparison data 212. Further, the transmitting module 226 may transmit data packets indicative of a content optimization strategy that is determined based on the determined information loss. The transmitted data packets may be stored as the transmission data 214. The content optimization strategy may be stored as the optimization data 216.

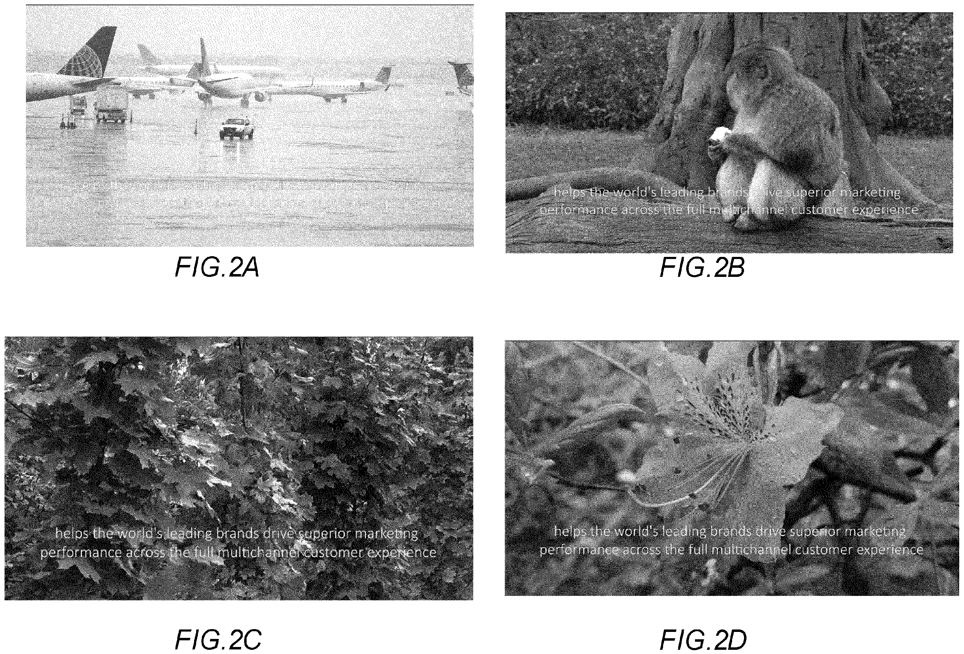

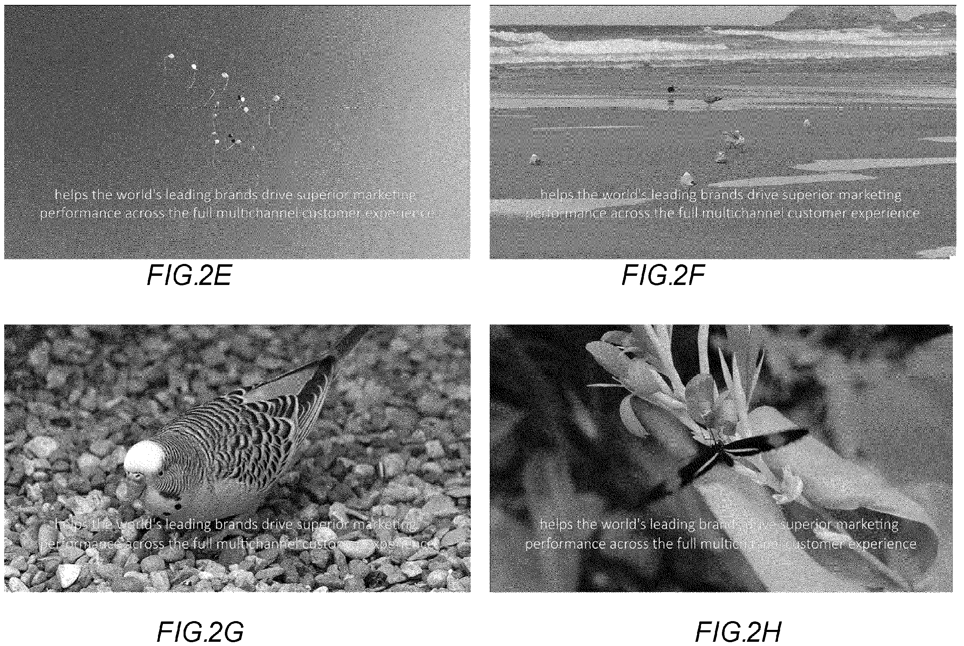

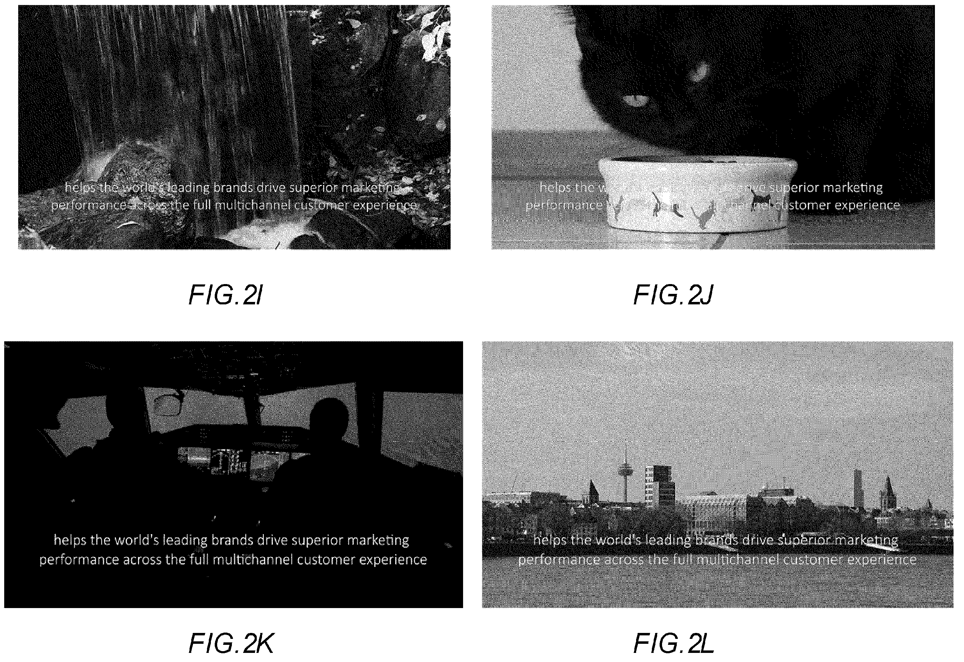

For example, the system 102 can generate a value to quantify amount of information loss for certain disabled users, and then the system 102 may output disability friendly content. The input to the system 102 may be, but are not limited to, advertisement video, social media post, and the like. Consider, a video including, different subtitles, different images, colorful images, and the like as shown in clippings of video image in FIGs. 2A-2L. To evaluate the video as shown in clippings of video in FIGs 2A-2L, first the system 102 may simulate the different disability on the video, and then evaluates, for example, for color blindness, amount of information lost for disability users, and an expected output. The system 102 may simulate plurality of disabilities in the video, for example, but are not limited to astigmatism, cataract, color blindness (deuteranopia, protanopia, tritanopia respectively), using display with light leakage, using display with low resolution (< 1080p), hearing losses, myopia, non-native language speaker, using device under sunshine, wearing earphone on the street (noisy environment), dyslexia, low energy state/ memory of disable user, and the like. Additionally, disabilities may vary for different users, for example, the destination/place or low energy state or memory users, because different users may have different experiences. Further, the system 102 may also be capable of generating simulations by the Artificial Intelligence (AI) if needed.

The system 102 may calculate the general information lost for each disability of the target user.

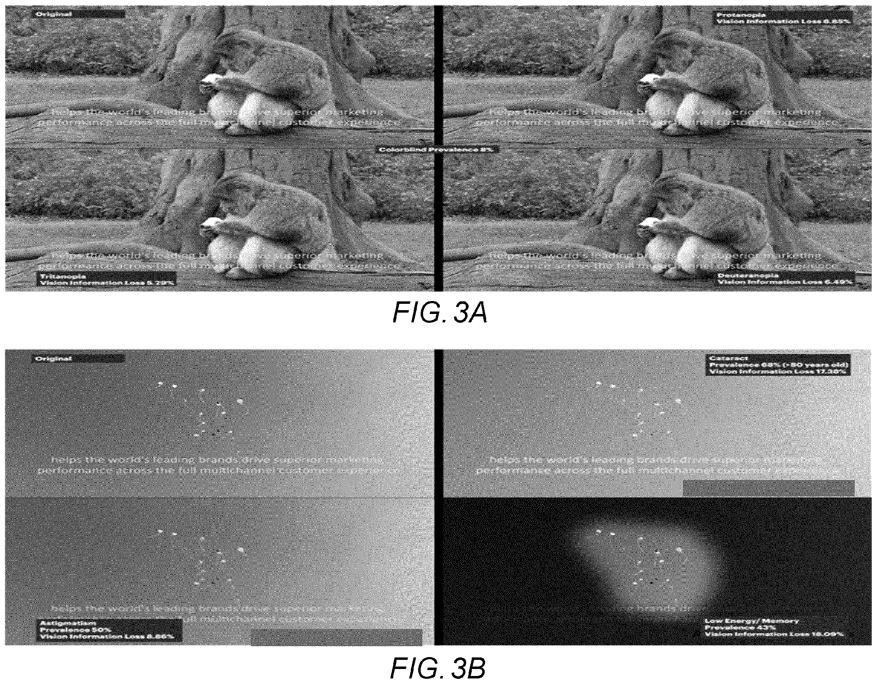

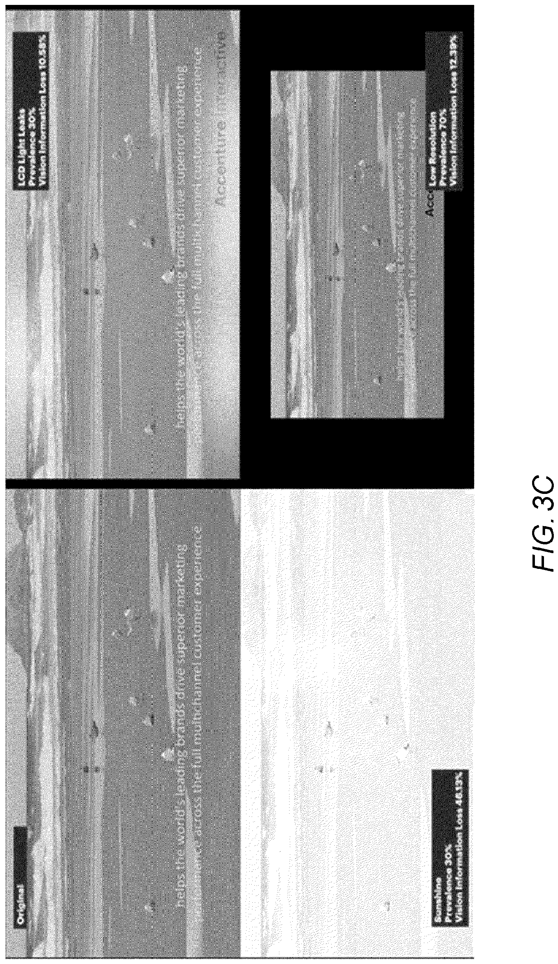

For example, for the low-resolution screen (non-High Definition (HD) display on devices, and the prevalence may be even, for example, 70% of the users use the low a relatively low-resolution screen. For these users, when the user uses the low-resolution display to watch the previous video, the video may lose some information.. Based on a final output, the system 102 may calculate the general accessibility score for the input video. This implies that there may be more information lost for the different kinds of disabilities. A content creator may take a week to manually improve, for example, the contrast of the images, the size of the font in the videos. The expected output from the system 102 may include, video example as shown in clippings of video in FIGs. 3A-3C. Further, the second format that the system 102 may generate for the output and the third format of output that the system 102 may indicate exactly which frame in the video might have very high visual information lost. Consider, two examples in the first example, consider users who use the device under sunshine, the user might have very high visual information loss, as seen in the simulation that there may be whitish picture, as shown in FIG. 3C. Similarly, birds in FIG. 3C may not be seen due to sunshine. In the second example, for the disabled user who have very low memory state and low energy, they cannot concentrate on several things in the same time. If the disabled user of low memory state and low energy, and see the monkey in the video as shown in FIG. 3A, the disable used may ignore the subtitle in video and may lose most of the information, much visual information as the disabled user may not concentrate on the monkey and on the subtitle at the same time. In the example, 2A-2L, key frames are the frames extracted from a video. If the minimum Hamming distance between a given frame's dHash and the previous extracted frames' dHashes may be larger than 10. The dHash (difference hash) for a given image may be a perceptual hash based on Neal Krawetz's dHash algorithm.

For example, the first step may be to extract the key frames. Normally, for a video for a normal video, they may be about 25. up to 30 frames a second. For a short event for a short video, there may be plurality of images to process.

The system 102 may extract the key frames, which means the most important frame frames in the video. The system, 100 may define key frames, using the Dhash algorithm for the input video, for example, 500 images. Finally, the system 102 may retain, for example, 17 keyframe images in the video, as seen in the video in the FIGs. 2A-2L. Further, any algorithm that could calculate the similarity of two images may also be used. The purpose of Dhash algorithm may be to calculate the similarity of two images. When two images are similar, the Dhash algorithm may ignore the second image.

The second step, may be to run rendered simulations on the input video. All the simulations, astigmatism which may be overlaid of the same frame multiple times with little distances shifted, cataract which may whiten the frame and render spherical blur transformation, color blindness (deuteranopia, protanopia, tritanopia), user using LCD screens with light leakage, which may need to simulate white light leakage on the top and bottom edges, myopia, non-native language speaker, the user may be using the device under sunshine, deuteranopia, in FIG. 3C device under sunshine. These are all the disabilities, the system 102 may render the simulation as the second step. Upon rendering the different disabilities simulations, the system 102 may extract respectively, the same key frames for the simulated video and for each image, the system 102 may extract images from the simulated video. For users using screens with low resolution, the system 102 may downscale the frame into low resolution, and for the users of hearing losses, the system 102 may transform the audio into frequency domain and adjust the amplitude for each frequency based on the right image. (e.g., for frequency 4kHz, decrease 42dB). In another example, if the system 102 may need to simulate the color blindness, the system 102 may use the mapping from the normal color space to the color blindness, color space, for the stimulation for the non-native language speaker, the system 102 may find the most frequent words in the video and the most relatively less frequently used the word in the video and combine all the non-native language words in the video. In another example, when a user may be using earphone on a busy street, the system 102 may transform the audio into frequency domain and adjust the amplitude for each frequency based on the right image, and then adds the street environment sound. Further, if the user may be of low energy state /memory, the AI models (Deep Residual Neural Network (DRNN) may be trained on memorability dataset, to provide simulation output to low energy state /memory user.

Further, the third step, may be to calculate the text information loss. The text information loss improves two different information loss. The first may be the text and notation and the recombination on the text and notation. Using AI, the system 102 may recall and analyze all the text in images. For each recombination text that recombination results, we have the certitude about the recognition. The text information loss may be calculated using the equation 1 above. The first part of the formula may be to compare the certitude (T) before the simulation and after the simulation to calculate for the human loss, the text recombination difficulties may have changed or not. Under the second part, the text information loss may be to calculate the contrast of each text, due to the higher contrast for each text may be much easier for the human to recognize the text. If the contrast may be too low, the users may not able to recognize the text anymore. Combining first and second part of the equation 1, the system 102 may calculate for all the text in images, regarding the information loss for the disabled users. If the information loss may be very low, then after the simulation, the contrast of each text and text re-combinations haven't been changed, which there may not be any text information loss. On the contrary, if the text information may be high, then all the texts may be harder for the human to be recognized.

Based on equation 1, the system 102 may calculate the final information loss, which may be, for example, 0.67. This means 67% of the information has lost in the pair of simulation. Similarly, the image information loss may be calculated using equation 2. In the image information loss, the system 102 may calculate the set certitude of the object, recombination certitude and additionally the system 102 may calculate the Peak Signal to Noise Ratio (PSNR) that can evaluate amount of noise in images. Further, the audio information loss may be calculated using the equation 3 above. In the audio information loss, the system 102 may calculate speech recognition certitude and music recombination certitude. This may be to determine speech, background music, and the like. The speech recognition certitude and the music recognition certitude may be used to evaluate the audio quality after the simulation. Finally, the system 102 may combine the text recombination information loss, image information loss and audio information loss, to calculate the average number of the information loss as the general information loss using the equation 4 above. Based on a probability, the system 102 may output final information loss for the input video. The final general accessibility score for the input video may be calculated using the equation 4 above. For example, if the score may be less, then the input video has multiple issues with the disability.

In some instance, only images theories may be inputted, or the sound checks for the video. Here a list of disabilities to simulate may be listed by the system 102, and performs the visual simulation and the audit simulations on the images series and soundtracks in the video, calculates the text information loss, image information loss, and general information loss. Based on the three intermediate information loss, the system 102 may calculate the final score based on the equation 4. For example, $L_{\{1,1,1,0,0,\dots,0\}}$ may present to simulate astigmatism, cataract and color blindness at the same time on the input video and calculate the general information loss for the simulation. The general information loss for j-th disability simulation may be provided using equation 6 below:

$$L_j = \frac{L_{text,j} + L_{image,j} + L_{audio,j}}{3} \,....Equation\ 6$$

All the disabilities may be independent and the prevalence value for j-th disability may be "$P_j$". To calculate information loss based on joint probability distribution formula as shown in equation 6 above. Based on the final score, the system 102 may provide the content optimization strategy. For example, in FIG. 3B, the system 102 may provide the strategy for the brain in the input video, which has visual information loss, and increase the contrast of the video of the FIG. 3B. Further, the information loss may be approximated as shown in equation 5 above. The general accessibility score for the input video may be $S = 100 * Score$.

For example, a good video or disability friendly video may have at least 80/100 score for the accessibility score. If, the input video may have only, for example, 67 over 100 score, then the video, for example advertisements, the content might have some issues with disabled users. The advertisement company may provide several version/formats of the of the advertisement for different disabilities to determine which video may have the highest accessibility score.

In some implementations, the system 102 may identify the one or more portions of the video/images using one or more image classification techniques (e.g., a Convolutional Neural Networks (CNNs) technique, a residual neural network (ResNet) technique, a Visual Geometry Group (VGG) technique) and/or an object detection technique (e.g., a Single Shot Detector (SSD) technique, a You Only Look Once (YOLO) technique, and/or a Region-Based Fully Convolutional Networks (R-FCN) technique). In some examples, the one or more portions may include one or more areas of the content (e.g., a top-right area, a bottom half area, a center area, or an entire area), one or more logos present in the content, one or more graphical objects in the content, and the like.

A neural network model (selected by the content system) may include a residual neural network (ResNet) model, a deep learning technique (e.g., a faster regional convolutional neural network (R-CNN)) model, a feed forward neural network model, a radial basis function neural network model, a Kohonen self-organizing neural network model, a recurrent neural network (RNN) model, a convolutional neural network model, a modular neural network model, a deep learning image classifier neural network model, a Convolutional Neural Networks (CNNs) model, and the like.

In some implementations, the neural network model may be trained using training data (e.g., historical and/or current). In some examples, the training data may include different content, data regarding features of the different content, data identifying a user category, content category data regarding categories (e.g., of content) identified by the different content, data regarding different= exposure times for the different content to users associated with the user category, time interval between exposures of the different content, information indicating whether the users remembered the different content, information identifying areas of the different content remembered by the users (e.g., a top-right area, a bottom half area, a center area, and/or an entire area), among other examples. The categories (identified by the different content) may include goods, services, among other examples. The exposure time may refer to a period of time during which the different content may be exposed (or presented) to the users.

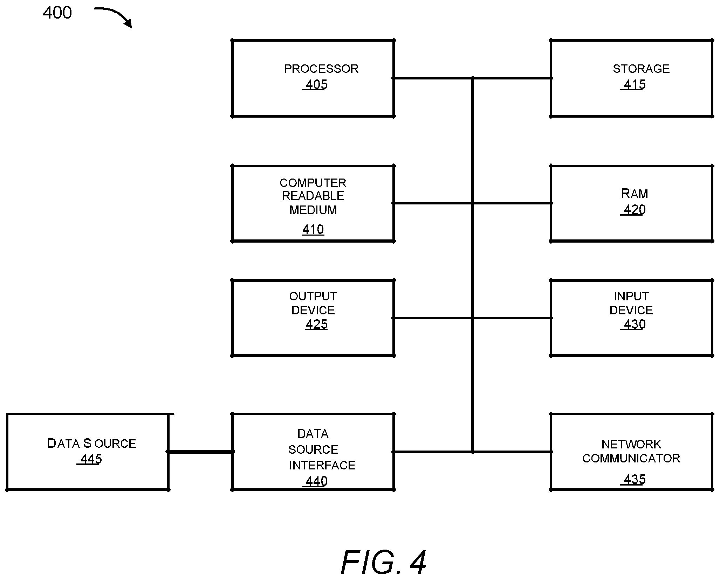

FIG. 4 illustrates a hardware platform 400 for implementation of the disclosed system, according to an example embodiment of the present disclosure. For the sake of brevity, construction and operational features of the system 102 which are explained in detail above are not explained in detail herein. Particularly, computing machines such as but not limited to internal/external server clusters, quantum computers, desktops, laptops, smartphones, tablets, and wearables which may be used to execute the system 102 or may include the structure of the hardware platform 400. As illustrated, the hardware platform 400 may include additional components not shown, and that some of the components described may be removed and/or modified. For example, a computer system with multiple GPUs may be located on external-cloud platforms including Amazon® Web Services, or internal corporate cloud computing clusters, or organizational computing resources, etc.

The hardware platform 400 may be a computer system such as the system 102 that may be used with the embodiments described herein. The computer system may represent a computational platform that includes components that may be in a server or another computer system. The computer system may execute, by the processor 405 (e.g., a single or multiple processors) or other hardware processing circuit, the methods, functions, and other processes described herein. These methods, functions, and other processes may be embodied as machine-readable instructions stored on a computer-readable medium, which may be non-transitory, such as hardware storage devices (e.g., RAM (random access memory), ROM (read-only memory), EPROM (erasable, programmable ROM), EEPROM (electrically erasable, programmable ROM), hard drives, and flash memory). The computer system may include the processor 405 that executes software instructions or code stored on a non-transitory computer-readable storage medium 410 to perform methods of the present disclosure. The software code includes, for example, instructions to gather data and documents and analyze documents. In an example, the information loss determination engine 108, may be software codes or components performing these steps.

The instructions on the computer-readable storage medium 410 are read and stored the instructions in storage 415 or in random access memory (RAM). The storage 415 may provide a space for keeping static data where at least some instructions could be stored for later execution. The stored instructions may be further compiled to generate other representations of the instructions and dynamically stored in the RAM such as RAM 420. The processor 405 may read instructions from the RAM 420 and perform actions as instructed.

The computer system may further include the output device 425 to provide at least some of the results of the execution as output including, but not limited to, visual information to users, such as external agents. The output device 425 may include a display on computing devices and virtual reality glasses. For example, the display may be a mobile phone screen or a laptop screen. GUIs and/or text may be presented as an output on the display screen. The computer system may further include an input device 430 to provide a user or another device with mechanisms for entering data and/or otherwise interact with the computer system. The input device 430 may include, for example, a keyboard, a keypad, a mouse, or a touchscreen. Each of these output devices 425 and input device 430 may be joined by one or more additional peripherals. For example, the output device 425 may be used to display the results such as bot responses by the executable chatbot.

A network communicator 435 may be provided to connect the computer system to a network and in turn to other devices connected to the network including other clients, servers, data stores, and interfaces, for instance. A network communicator 435 may include, for example, a network adapter such as a LAN adapter or a wireless adapter. The computer system may include a data sources interface 440 to access the data source 445. The data source 445 may be an information resource. As an example, a database of exceptions and rules may be provided as the data source 445. Moreover, knowledge repositories and curated data may be other examples of the data source 445.

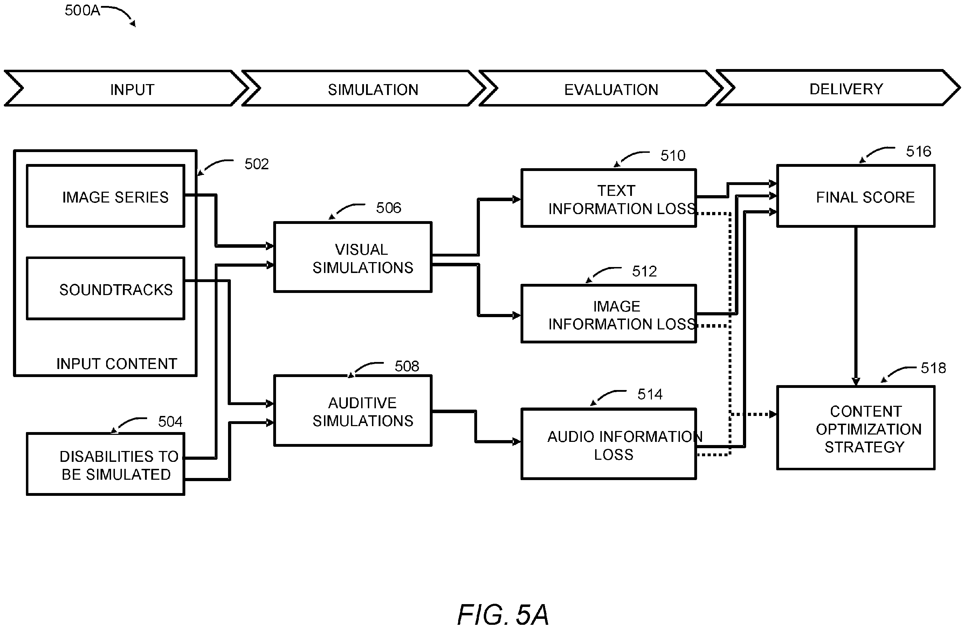

FIG. 5A illustrates a flow diagram depicting method 500A of simulation of content, according to an example embodiment of the present disclosure.

At step 502, the method 500A includes, inputting the content such as video or image or audio. At step 504, the method 500A includes selecting a list of disabilities to be simulated. At step 506 and 508, the method 500A includes simulating disability by render all the selected disability simulations on the input content. The key frames from the video may be extracted, by use the same timings for extracting key frames in every simulated content. At step 510 and 514, the method 500A includes calculating text information loss and image information loss if the input content may be video or image. At step 514, the method 500A includes calculating audio information loss if the input content may be video or audio. At step 516, the method 500A includes calculating final score for the input content by using information loss approximation formula. At step 518, the method 500A includes delivering the content, in which the key frames which have the highest information loss for each simulation may be optimized using a content optimization strategy.

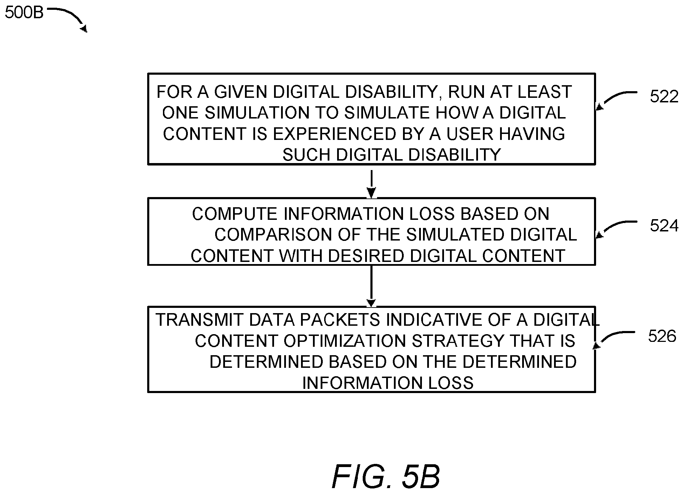

FIG. 5B illustrates a flow diagram depicting method 500B of disability simulations and accessibility evaluations of content, according to an example embodiment of the present disclosure.

At block 522, the method 500B may include retrieving, by the information loss determination engine 108 via the processor 104, for a given disability, run at least one simulation to simulate how a content may be experienced by a user having such disability.

At block 524, the method 500B may include establishing, by the information loss determination engine 108 via the processor 104, compute information loss based on comparison of the simulated content with desired original content.

At block 526, the method 500B may include quantifying, by the information loss determination engine 108 via the processor 104, transmit data packets indicative of a content optimization strategy that may be determined based on the determined information loss.

The order in which the method 500B are described is not intended to be construed as a limitation, and any number of the described method blocks may be combined or otherwise performed in any order to implement the method 500B or an alternate method. Additionally, individual blocks may be deleted from the method 500B without departing from the spirit and scope of the present disclosure described herein. Furthermore, the method 500B may be implemented in any suitable hardware, software, firmware, or a combination thereof, that exists in the related art or that is later developed. The method 500 describes, without limitation, the implementation of the system 102. A person of skill in the art will understand that method 500B may be modified appropriately for implementation in various manners without departing from the scope and spirit of the disclosure.

One of ordinary skill in the art will appreciate that techniques consistent with the present disclosure are applicable in other contexts as well without departing from the scope of the disclosure.

What has been described and illustrated herein are examples of the present disclosure. The terms, descriptions, and figures used herein are set forth by way of illustration only and are not meant as limitations. Many variations are possible within the spirit and scope of the subject matter, which is intended to be defined by the following claims and their equivalents in which all terms are meant in their broadest reasonable sense unless otherwise indicated.

**Claims**

**1.** A system comprising:

an information loss determination engine, which when executed using a processor, causes the engine to:

for a given disability, run at least one simulation to simulate how a content is experienced by a user having the given disability;

compute information loss based on comparison of the simulated content with desired original content; and

transmit data packets indicative of a content optimization strategy that is determined based on the determined information loss.

2. The system as claimed in claim 1, wherein the content is at least one of an image, a video, text, an audio, a webpage, and a set of video frames, store design/ designs, interior/ exterior designs, drawings, newspaper/ magazines, and billboards, and wherein the information loss comprises at least one of text information loss, visual information loss, content information loss, audio information loss, video information loss, and image information loss.

3. The system as claimed in claim 2, wherein the text information loss is computed based on annotation and recognition of text that forms part of the content using contrasts (C) and text recognition certitude values (T) for the j-th image pair and the i-th text block pair as:

$$L_{text} = \frac{1}{n}\Sigma_{j=1}^n \frac{1}{m}\Sigma_{i=1}^m r_i \times [\max(0, \min\left(\frac{C_{s,i} - C_{o,i}}{C_{o,i}}, 1\right), \min\left(\frac{T_{o,i} - T_{s,i}}{T_{o,i}}, 1\right))]$$

where,

$r_i = 1_{\{font\ size>3\%\ video\ height\}}$ or $0_{\{font\ size\leq3\%\ video\ height\}}$

n is the number of key frame pairs, and m is the number of text blocks that *font size>3% video height*

4. The system as claimed in claim 2 or 3, wherein the image information loss is computed based on Peak signal-to-noise ratio (PSNR) for simulated image/video, and object recognition using calculation of object recognition certitude value (OC) on j-th image pair and the i-th object detected as:

$$L_{image} = \frac{1}{n}\Sigma_{j=1}^n [p_2 \times \max(\frac{30 - PSNR_j}{30}, 0)$$

$$+ (1 - p_2) \times \frac{1}{m}\Sigma_{i=1}^m r_i \times \min(\frac{OC_{s,i} - OC_{o,i}}{OC_{o,i}}, 1)]$$

where,

$p_2 \in [0,1]$ (Default 0.5)

$r_i = 1_{\{object\ size>3\%\ video\ size\}}$ or $0_{\{object\ size\leq3\%\ video\ size\}}$

n is the number of key frame pairs

m is the number of objects recognized that *object size>3% video size*

5. The system as claimed in claim 2, 3 or 4, wherein the audio information loss is computed based on speech recognition and sound classification, wherein for the i-th speech phrase recognized and j-th sound classified, speech recognition certitude (SC) and music recognition certitude (MC) are calculated and used to calculate the audio information loss as:

$$L_{audio} = \frac{1}{m}\Sigma_{j=1}^m [p_3 \times \min\left(\frac{SC_{s,i} - SC_{o,i}}{SC_{o,i}}, 1\right)]$$

$$+ \frac{1}{k}\Sigma_{i=1}^k [(1 - p_3) \times \min\left(\frac{MC_{s,i} - MC_{o,i}}{MC_{o,i}}, 1\right)]$$

where,
m is the number of speech phrases and k is the number of soundtracks $p_3 \in [0,1]$ (Default 0.5).

**6.** The system as claimed in any of claims 2 to 5, wherein the general information loss is computed based on average of the text information loss, the audio information loss, and the image information loss, and wherein the general information loss is computed based on joint probability distribution for j-th disability $P_j$, as:

$$L = \Sigma_{j_1=0}^{1} \Sigma_{j_2=0}^{1} \cdots \Sigma_{j_n=0}^{1} \prod_{j=j_1}^{j_n}\left(1 - P_j\right)L_{\{j_1,j_2,\ldots,j_n\}}$$

where, n is the number of simulations to be generated and $L_{\{j_1,j_2,\ldots,j_n\}}$ presents the information loss of the multi-disability simulated content,
wherein the information loss is approximated as:

$$Approximated\ Information\ Loss = 1 - min(\sum_{j=1}^{n} P_j \times L_j\ ,\ 1)$$

where, n is the number of simulations to be generated.

**7.** The system as claimed in any of the preceding claims, wherein the disability is at least one of low-resolution screen, astigmatism, using device under sunshine, color blindness, myopia, low energy state/memory, dyslexia, screen light leakage, cataract, hearing loss, noisy environment, non-native language speaker, bad sleep quality, device virus impact, user disability, and bad Internet connection.

**8.** The system as claimed in any of the preceding claims, wherein for computation of information loss, the processor causes the engine to:

determine key information components that forms part of the desired original content;
extract corresponding determined key information components from the simulated content; and
compute the information loss based on comparison of the key information components that form part of the simulated content with the desired original content.
wherein, optionally, for the content being a video, the key information components comprise one or more key video frames, wherein, optionally, the comparison is undertaken based on difference hash (dHash), and wherein, optionally, the key information components are determined based on the disability for which respective at least one simulation is to be executed.

**9.** A method for disability simulations and accessibility evaluations of content, the method comprising:

running, by an information loss determination engine via a processor, for a given disability, at least one simulation to simulate how a content is experienced by a user having the given disability;
computing, by the information loss determination engine, information loss based on comparison of the simulated content with desired original content; and
transmitting, by the information loss determination engine, data packets indicative of a content optimization strategy that is determined based on the determined information loss.

**10.** The method as claimed in claim 9, wherein the content is at least one of an image, a video, text, an audio, a webpage, and a set of video frames, store design/ designs, interior/ exterior designs, drawings, newspaper/ magazines, and billboards, and wherein the information loss comprises at least one of text information loss, visual information loss, content information loss, audio information loss, video information loss, and image information loss.

**11.** The method as claimed in claim 10, wherein the text information loss is computed based on annotation and recognition of text that forms part of the content using contrasts (C) and text recognition certitude values (T) for the j-th image pair and the i-th text block pair as:

$$L_{text} = \frac{1}{n}\Sigma_{j=1}^{n} \frac{1}{m}\Sigma_{i=1}^{m} r_i \times [\max(0, \min\left(\frac{C_{s,i} - C_{o,i}}{C_{o,i}}, 1\right), \min\left(\frac{T_{o,i} - T_{s,i}}{T_{o,i}}, 1\right))]$$

where,

$r_i = 1_{\{font\ size>3\%\ video\ height\}}$ or $0_{\{font\ size\leq 3\%\ video\ height\}}$
n is the number of key frame pairs, and m is the number of text blocks that *font size>3% video height*; or

wherein the image information loss is computed based on Peak signal-to-noise ratio (PSNR) for simulated image/video, and object recognition using calculation of object recognition certitude value (OC) on j-th image pair and the i-th object detected as:

$$L_{image} = \frac{1}{n}\Sigma_{j=1}^{n} [p_2 \times \max(\frac{30 - PSNR_j}{30}, 0)$$

$$+ (1 - p_2) \times \frac{1}{m}\Sigma_{i=1}^{m} r_i \times \min(\frac{OC_{s,i} - OC_{o,i}}{OC_{o,i}}, 1)]$$

where,

$p_2 \in [0,1]$ (Default 0.5)
$r_i = 1_{\{object\ size>3\%\ video\ size\}}$ or $0_{\{object\ size\leq 3\%\ video\ size\}}$
n is the number of key frame pairs
m is the number of objects recognized that *object size>3% video size*; or

wherein the audio information loss is computed based on speech recognition and sound classification, wherein for the i-th speech phrase recognized and j-th sound classified, speech recognition certitude (SC) and music recognition certitude (MC) are calculated and used to calculate the audio information loss as:

$$L_{audio} = \frac{1}{m}\Sigma_{j=1}^{m} [p_3 \times \min\left(\frac{SC_{s,i} - SC_{o,i}}{SC_{o,i}}, 1\right)]$$

$$+ \frac{1}{k}\Sigma_{i=1}^{k} [(1 - p_3) \times \min\left(\frac{MC_{s,i} - MC_{o,i}}{MC_{o,i}}, 1\right)]$$

where,
m is the number of speech phrases and k is the number of soundtracks $p_3 \in [0,1]$ (Default 0.5),

12. The method as claimed in claim 10 or 11, wherein the general information loss is computed based on average of the text information loss, the audio information loss, and the image information loss, and wherein the general information loss is computed based on joint probability distribution for j-th disability $P_j$, as:

$$L = \Sigma_{j_1=0}^{1} \Sigma_{j_2=0}^{1} \cdots \Sigma_{j_n=0}^{1} \prod_{j=j_1}^{j_n}\left(1 - P_j\right)L_{\{j_1,j_2,\ldots,j_n\}}$$

where, n is the number of simulations to be generated and $L_{\{j_1,j_2,\ldots,j_n\}}$ presents the information loss of the multi-disability simulated content,
wherein the information loss is approximated as:

$$Approximated\ Information\ Loss = 1 - min(\sum_{j=1}^{n} P_j \times L_j,\ 1)$$

where, n is the number of simulations to be generated.

13. The method as claimed in any of claims 9 to 12, wherein the disability is at least one of low-resolution screen, astigmatism, using device under sunshine, color blindness, myopia, low energy state/memory, dyslexia, screen light leakage, cataract, hearing loss, noisy environment, non-native language speaker, bad sleep quality, device virus impact, user disability, and bad Internet connection.

14. The method as claimed in any of claims 9 to 13, wherein for computation of information loss, the processor causes the engine to:

determine key information components that forms part of the desired original content;
extract corresponding determined key information components from the simulated content; and
compute the information loss based on comparison of the key information components that form part of the simulated content with the desired original content,
wherein, optionally, for the content being a video, the key information components comprise one or more key video frames, wherein, optionally, the comparison is undertaken based on difference hash (dHash), and wherein, optionally, the key information components are determined based on the disability for which respective at least one simulation is to be executed.

15. A non-transitory computer readable medium comprising machine executable instructions that may be executable by a processor to:

for a given disability, run at least one simulation to simulate how a content is experienced by a user having the given disability;
compute information loss based on comparison of the simulated content with desired original content; and
transmit data packets indicative of a content optimization strategy that is determined based on the determined information loss.

*FIG. 1A*

FIG.1B

EP 4 216 196 A1

EP 4 216 196 A1

FIG.2A

FIG.2B

FIG.2C

FIG.2D

16

FIG.2E

FIG.2F

FIG.2G

FIG.2H

*FIG.2J*

*FIG.2L*

*FIG.2I*

*FIG.2K*

*FIG. 3A*

*FIG. 3B*

FIG. 3C

EP 4 216 196 A1

400

```
┌─────────────────┐              ┌─────────────────┐
│   PROCESSOR     │              │    STORAGE      │
│      405        │              │      415        │
└─────────────────┘              └─────────────────┘

┌─────────────────┐              ┌─────────────────┐
│    COMPUTER     │              │      RAM        │
│    READABLE     │              │      420        │
│    MEDIUM       │              │                 │
│      410        │              │                 │
└─────────────────┘              └─────────────────┘

┌─────────────────┐              ┌─────────────────┐
│    OUTPUT       │              │    INPUT         │
│    DEVICE       │              │    DEVICE        │
│      425        │              │      430         │
└─────────────────┘              └─────────────────┘

┌───────────────┐ ┌─────────────────┐  ┌─────────────────┐
│  DATA SOURCE  │ │     DATA        │  │    NETWORK      │
│      445      │ │    SOURCE       │  │  COMMUNICATOR   │
│               │ │   INTERFACE     │  │      435        │
│               │ │      440        │  │                 │
└───────────────┘ └─────────────────┘  └─────────────────┘
```

FIG. 4

FIG. 5A

500B

| FOR A GIVEN DIGITAL DISABILITY, RUN AT LEAST ONE SIMULATION TO SIMULATE HOW A DIGITAL CONTENT IS EXPERIENCED BY A USER HAVING SUCH DIGITAL DISABILITY | 522 |

| COMPUTE INFORMATION LOSS BASED ON COMPARISON OF THE SIMULATED DIGITAL CONTENT WITH DESIRED DIGITAL CONTENT | 524 |

| TRANSMIT DATA PACKETS INDICATIVE OF A DIGITAL CONTENT OPTIMIZATION STRATEGY THAT IS DETERMINED BASED ON THE DETERMINED INFORMATION LOSS | 526 |

*FIG. 5B*

Europäisches
Patentamt

European
Patent Office

Office européen
des brevets

# EUROPEAN SEARCH REPORT

Application Number

EP 22 30 5057

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/356848 A1 (PETERSON BRIAN [US]) 4 December 2014 (2014-12-04) * paragraph [0100] – paragraph [0101] * * paragraph [0025] – paragraph [0026] * * paragraph [0056] – paragraph [0058] * * paragraph [0119] – paragraph [0121] * ----- | 1-15 | INV. G09B21/00 |

TECHNICAL FIELDS SEARCHED (IPC)

G09B

The present search report has been drawn up for all claims

| Place of search | Date of completion of the search | Examiner |
|---|---|---|
| Munich | 10 June 2022 | Hanon, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 5057

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2022

| Patent document cited in search report | Publication date | Patent family member(s) | Publication date |
|---|---|---|---|
| US 2014356848 A1 | 04-12-2014 | NONE | |

For more details about this annex : see Official Journal of the European Patent Office, No. 12/82

EPO FORM P0459